(19) 

Europäisches
Patentamt
European
Patent Office
Office européen
des brevets

(11) **EP 2 979 779 A1**

(12) **EUROPEAN PATENT APPLICATION**
published in accordance with Art. 153(4) EPC

(43) Date of publication:
**03.02.2016 Bulletin 2016/05**

(21) Application number: **14774800.8**

(22) Date of filing: **25.03.2014**

(51) Int Cl.:
**B22F 1/00** (2006.01)   **C09C 1/62** (2006.01)
**C09D 7/12** (2006.01)   **C09D 201/00** (2006.01)

(86) International application number:
**PCT/JP2014/058237**

(87) International publication number:
**WO 2014/157177 (02.10.2014 Gazette 2014/40)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **29.03.2013 JP 2013072602**

(71) Applicant: **Toyo Aluminium Kabushiki Kaisha
Osaka-shi, Osaka 541-0056 (JP)**

(72) Inventors:
• **HASHIZUME, Yoshiki**
  **Osaka-shi**
  **Osaka 541-0056 (JP)**
• **IMAOKA, Manabu**
  **Osaka-shi**
  **Osaka 541-0056 (JP)**

(74) Representative: **Bockhorni & Kollegen
Elsenheimerstraße 49
80687 München (DE)**

(54) **STAINLESS STEEL FLAKE PIGMENT, RESIN COMPOSITION CONTAINING SAME, AND COATED PRODUCT HAVING COATING FILM FORMED FROM SAID RESIN COMPOSITION**

(57)    The present invention relates to a flaky stainless-steel pigment. The flaky stainless-steel pigment consists of particles having a $D_{90}$ of 55 μm or less in the volume cumulative particle size distribution and a passing rate of 99% or more by weight through a sieve having an aperture size of 38 μm.

FIG.1

EP 2 979 779 A1

**Description**

TECHNICAL FIELD

The present invention relates to a flaky stainless-steel pigment, a resin composition formulated with the same, and a coated product provided with a coating film formed from the resin composition.

BACKGROUND ART

Metal pigments containing flaky metals are widely used in, for example, metal products, plastic products and ceramic products, of which typical examples include automobiles, home appliances, cosmetics and building materials, for the purpose of imparting those products a metallic appearance. Among them, a coating film formulated with the metal pigment containing stainless steel is known to offer a metallic appearance with massive feeling (for example, see Japanese Patent Laying-Open No. 2006-152299 (PTD 1)).

Further, the coating film formulated with the stainless steel has an excellent corrosion resistance and a high hardness, and thereby has been attracting attention as an thick anticorrosive coating composition. For example, Japanese Patent Laying-Open No. 2000-154338 (PTD 2), Japanese Patent Laying-Open No. 2002-273339 (PTD 3) have disclosed a technique of coating for example roofs, bridges and iron towers which are exposed to harsh environments such as UV and acid rains by using a metal pigment containing a flaky stainless steel.

Various studies have been made in order to further improve the corrosion resistance of the coating film formulated with the flaky stainless steel mentioned above. For example, Japanese Patent Laying-Open No. 2004-269647 (PTD 4) discloses a metal pigment which is obtained by coating mechanically-mixed zinc powder on the surface of the flaky stainless steel powder so as to enhance its protection effect against rust. Further, Japanese Patent Laying-Open No. 2007-244992 (PTD 5) discloses a technique for enhancing the light resistance of a metal plate by forming thereon a coating film containing an ultraviolet absorber or a light stabilizer in addition to stainless steel powder.

CITATION LIST

PATENT DOCUMENT

PTD 1: Japanese Patent Laying-Open No. 2006-152299
PTD 2: Japanese Patent Laying-Open No. 2000-154338
PTD 3: Japanese Patent Laying-Open No. 2002-273339
PTD 4: Japanese Patent Laying-Open No. 2004-269647
PTD 5: Japanese Patent Laying-Open No. 2007-244992

SUMMARY OF INVENTION

TECHNICAL PROBLEM

However, in the technique disclosed in PTD 4, coating zinc on the surface of the stainless steel may cause resin to gelate in the coating composition. In the technique disclosed in PTD 5, the ultraviolet absorber or the light stabilizer may segregate in the coating composition, making the coating composition unstable. In other words, in the conventional arts, the corrosion resistance provided by the stainless-steel pigment are not yet sufficient.

The present invention has been accomplished in view of the aforementioned problems, and it is therefore an object of the present invention to provide a flaky stainless-steel pigment having a high corrosion resistance, a resin composition formulated with the same, and a coated product provided with a coating film formed from the resin composition.

SOLUTION TO PROBLEM

The flaky stainless-steel pigment of the present invention consists of particles having a $D_{90}$ of 55 $\mu$m or less in the volume cumulative particle size distribution and a passing rate of 99% or more by weight through a sieve having an aperture size of 38 $\mu$m.

In the flaky stainless-steel pigment, the average thickness t is 0.03 $\mu$m or more to 0.5 $\mu$m or less, the average particle size $D_{50}$ is preferably 3 $\mu$m or more to 30 $\mu$m or less, the average aspect ratio ($D_{50}$/t), which is a ratio of the

mean particle size $D_{50}$ relative to the average thickness t, is preferably 5 or more to 500 or less, and more preferably is 10 or more to 100 or less. In addition, the $D_{90}$ is 40 $\mu$m or less.

The invention also relates to a resin composition formulated with the flaky stainless-steel pigment mentioned above and a coated product provided with a coating film formed from the resin composition.

ADVANTAGEOUS EFFECTS OF INVENTION

The flaky stainless-steel pigment, the resin composition formulated with the same, and the coated product provided with a coating film formed from the resin composition each can exhibit excellent effects such as a high corrosion resistance.

BRIEF DESCRIPTION OF DRAWINGS

Fig. 1 is a diagram illustrating the state of a crack on a coating film formed from a coating composition formulated with a paste of Example 5 after 250 hours;
Fig. 2 is a diagram illustrating the state of a crack on a coating film formed from a coating composition formulated with a paste of Example 5 after 250 hours;
Fig. 3 is a diagram illustrating the state of a crack on a coating film formed from a coating composition formulated with a paste of Comparative Example 1 after 250 hours; and
Fig. 4 is a diagram illustrating the state of a crack on a coating film formed from a coating composition formulated with a paste of Comparative Example 1 after 250 hours.

DESCRIPTION OF EMBODIMENTS

Hereinafter, a flaky stainless-steel pigment, a resin composition formulated with the same, and a coated product provided with a coating film formed from the resin composition of the present invention will be described in more detail.

<Flaky Stainless-steel Pigment>

The flaky stainless-steel pigment of the present invention consists of particles having a $D_{90}$ of 55 $\mu$m or less in the volume cumulative particle size distribution and a passing rate of 99% or more by weight through a sieve having an aperture size of 38 $\mu$m.

In the present specification, the term of "volume cumulative particle size distribution" refers to such a cumulative volume particle size distribution that is obtained by measuring the volume average size of particles in the flaky stainless-steel pigment, and the wording of "$D_{90}$ of 55 $\mu$m or less" means that in a volume cumulative particle size distribution curve where the vertical axis denotes the cumulative frequency (%) and the horizontal axis denotes the particle size ($\mu$m), the particles having a particle size of 55 $\mu$m or less occupy a cumulative frequency of 90%. Note that the volume average particle size can be determined by calculating the volume average on the basis of the particle size distribution measured according to laser diffractometry.

In the present specification, the "passing rate" of a sieve may be determined based on the following equation (1),

$$\text{passing rate (wt\%)} = \{(S1\text{-}S2)/S1\} \times 100 \qquad (1)$$

wherein, S1 denotes the weight of the flaky stainless-steel pigment before being sieved by using a sieve according to wet sieving, and S2 denotes the weight of the flaky stainless-steel pigment remained on the sieve after being sieved.

Specifically, the flaky stainless-steel pigment of the present invention is an aggregate of particles having a flake shape, 90 vol% or more of the particles in the aggregates have the volume average particle size of 55 $\mu$m or less, and 99% or more by weight of the particles in the aggregate can pass through the sieve having an aperture size of 38 $\mu$m.

Compared to a conventional flaky stainless-steel pigment, the flaky stainless-steel pigment of the present invention having the above characteristics can exhibit a high corrosion resistance. For example, a coating film formed from the resin composition formulated with the flaky stainless-steel pigment of the present invention can have a high corrosion resistance. Furthermore, the coating film can have a high wear resistance and a high tribological property.

It should be noted that even the flaky stainless-steel pigment consists of particles having a passing rate of 99% or more by weight through a sieve having an aperture size of 38 $\mu$m, if the $D_{90}$ is greater than 55 $\mu$m, the orientation of

the flaky stainless-steel pigment in the coating film tends to decrease. As a result, the flaky stainless-steel pigment is likely to protrude from the coating film, and cracks may occur around the protruding portions, which makes it impossible to exhibit sufficient corrosion resistance. Moreover, due to the decrease of orientation, voids are liable to occur in the coating film, which makes the coating film be easily peeled off from the voids, and naturally, such coating film will have a lower wear resistant and a lower tribological property.

In addition, even the flaky stainless-steel pigment consists of particles having a $D_{90}$ of 55 $\mu$m or less, if the passing rate of the particles passing through a sieve having an aperture size of 38 $\mu$m is less than 99% by weight, the orientation of the flaky stainless-steel pigment in the coating film also tends to decrease. Thereby, as mentioned in the above, it is impossible to exhibit the effect of the present invention.

Thus, in order to exhibit the effect mentioned above, the flaky stainless-steel pigment is required to consist of particles having not only a $D_{90}$ of 55 $\mu$m or less in the volume cumulative particle size distribution but also a passing rate of 99% or more by weight through a sieve having an aperture size of 38 $\mu$m. The reason thereof is not clear, but the following fact may be considered as a possible one.

Specifically, by limiting the particles to the size of $D_{90}$ in the volume cumulative particle size distribution as mentioned above, it is not sufficient enough to completely prevent coarse particles that adversely affect the appearance of the coating film from being mixed into the flaky stainless-steel pigment, and meanwhile, by limiting the particles to the size with a passing rate of 99% or more by weight through a sieve having an aperture size of 38 $\mu$m, it is not sufficient enough to completely prevent irregular particles such as rod-shaped particles from being mixed therein. In contrast, the flaky stainless-steel pigment according to the present invention satisfies both requirements as mentioned above, and thereby, it is possible for it to exhibit the effects of the present invention as mentioned above.

In the flaky stainless-steel pigment of the invention mentioned above, it is more preferably that $D_{90}$ is 40 $\mu$m or less, which makes it possible to form a coating film with less defects, and thereby exhibit even higher corrosion resistance, higher wear resistance and higher tribological property. Moreover, in the flaky stainless-steel pigment of the present invention, it is preferable that the passing rate through a sieve having an aperture size of 38 $\mu$m is 99.9% or more by weight, which makes it possible to form a coating film with less defects, and thereby exhibit even higher corrosion resistance, higher wear resistance and higher tribological property.

In the flaky stainless-steel pigment of the present invention, the type of stainless steel is not particularly limited, and any conventionally known stainless steel, for example, ferritic stainless steel, austenitic stainless steel, martensitic stainless steel or two-phase stainless steel may be used. In particular, from the consideration of providing higher corrosion resistance and higher workability, it is preferable to use ferritic stainless steel or austenitic stainless steel. Among the ferritic stainless steels, SUS430, and the products of NSS445M2 and NSS447M1 produced by Nisshin Steel Co., Ltd. are preferred, and among the austenitic stainless steels, SUS304, SUS316 and SUS316L are preferred. Further, from the consideration of providing higher corrosion resistance even under an extremely hash corrosive environment such as sea water, the product ofNSSURC produced by Nisshin Steel Co., Ltd. may be used suitably. It should be noted that the stainless steel may contain inevitable impurities, and as long as the effects of the present invention can be exhibited, the content of inevitable impurities is not particularly limited. However, from the consideration of maintaining the corrosion resistance and workability, the content of inevitable impurities in the flaky stainless-steel pigment is preferably 1% or less.

In the flaky stainless-steel pigment of the present invention, it is preferable that the average thickness (t) is 0.03 $\mu$m or more to 0.5 $\mu$m or less and the average particle size ($D_{50}$) is 3 $\mu$m or more to 30 $\mu$m or less. It is more preferable that t is 0.03 $\mu$m or more to 0.33 $\mu$m or less and $D_{50}$ is 3 $\mu$m or more to 20 $\mu$m or less, and it is further preferable that t is 0.09 $\mu$m or more to 0.33 $\mu$m or less and $D_{50}$ is 5 $\mu$m or more to 20 $\mu$m or less. In this case, the flaky stainless-steel pigment can be suitably stacked in a very thin coating film having for example a thickness of 10 $\mu$m or less, and thereby, it is possible to increase the labyrinth effect (shielding effect) against corrosive substances.

On the other hand, in the case where t is less than 0.03 $\mu$m, it is difficult to handle it in the producing step, and in the case where t is greater than 0.5 $\mu$m, it is necessary to thicken the coating film for suitable stacking. Similarly, in the case where $D_{50}$ is less than 3 $\mu$m or greater than 30 $\mu$m, the same problem occurs. In the present specification, "$D_{50}$" means that the particles having a certain particle size occupy a cumulative frequency of 50% in the cumulative volume particle size distribution mentioned above.

Furthermore, it is preferable that the average aspect ratio ($D_{50}/t$), which is a ratio of the mean particle size $D_{50}$ relative to the average thickness t, is preferably 5 or more to 500 or less, and more preferably is 10 or more to 100 or less. In the case where the average aspect ratio is less than 5, it is impossible for the flaky stainless-steel pigment in the coating film to exhibit sufficient shielding effect, whereas in the case where the average aspect ratio is greater than 500, the viscosity of the flaky stainless-steel pigment tends to increase greatly in the resin composition, which makes it difficult to formulate the flaky stainless-steel pigment in the resin composition at an appropriate amount. In addition, in the case where the average aspect ratio is greater than 500, the bulk density of the flaky stainless-steel pigment becomes smaller, and consequently, the gap between the flaky stainless-steel pigments in the coating film becomes greater, resulting in more voids in the resin composition, and thereby, the corrosion resistance of the coating film is likely to be lowered.

The flaky stainless-steel pigment of the present invention, as long as it can exhibit the effects of the present invention, may have any configuration other than the abovementioned configuration, for example, it can include a coating layer coated on the surface of the flaky stainless steel. However, from the consideration of preserving the excellent appearance of the coating film and preventing the producing step from becoming complicated, it is preferable that the flaky stainless-steel pigment is composed of solely flaky stainless steel without any other configuration such as a coating layer.

As mentioned above in detail, since the flaky stainless-steel pigment of the present invention can exhibit a high corrosion resistance, it is excellent in coating applications, and in particular, it can be suitably used for coating those structural materials that are exposed to harsh environments. Moreover, since the flaky stainless-steel pigment of the present invention has the abovementioned properties, it is expectable for it to improve the other properties such as heat insulation, heat resistance, flame resistance and lightning surge protection.

<Producing Method>

The flaky stainless-steel pigment of the present invention mentioned above can be produced according to the following method.

A first step is to prepare stainless steel powder as a starting material (preparing step). Note that any powder obtained by any known method such as the atomization method, the crushing method, the rotating disc method, the rotational electrode method, the cavitation method or the melt spinning method may used as the stainless steel powder. However, from the consideration of reducing the manufacturing cost and preserving the uniformity of the powder, it is preferable to use the stainless steel powder obtained by the atomization method.

A second step is to transform the prepared stainless steel powder into flakes (transforming step). As a method of transforming power into flakes, any method for pulverizing and flattening the stainless steel powder by using for example a wet ball mill, a dry ball mill or a bead mill may be adopted. However, from the consideration of safety and workability, it is preferable to use the wet ball mill.

A third step is to sieve the flattened flaky stainless steel powder by using a sieve having an aperture size of 38 $\mu$m or less (sieving step). The flaky stainless-steel pigment of the present invention is obtained by recovering the flaky stainless steel powder passed through the sieve.

In the preparing step mentioned above, $D_{90}$ of the stainless steel powder is preferably 5 $\mu$m or more to 20 $\mu$m or less and more preferably to 10 $\mu$m or less, which makes it possible to increase the recovery rate of the finally obtained flaky stainless-steel pigment. In the case where $D_{90}$ is greater than 20 $\mu$m, the flaky stainless steel powder is coarsened through the transforming step at an excessive amount, which decreases the recovery rate of the finally obtained flaky stainless-steel pigment and may lengthen the sieving step as well. In the case where $D_{90}$ is less than 5 $\mu$m, it is difficult to handle the flaky stainless-steel pigment such as separating a solid-liquid mixture which is formed in accordance with the grinding by a wet ball mill, making the separation time longer.

In addition, it is preferable that $D_{50}$ of the stainless steel powder is 2 $\mu$m or more to 10 $\mu$m or less, which makes it possible to increase the recovery rate of the finally obtained flaky stainless-steel pigment according to the same reason as mentioned above. In the present specification, the recovery rate refers to a rate of the weight of the finally obtained flaky stainless-steel pigment relative to the weight of the originally used stainless steel powder. The meaning of $D_{90}$ and $D_{50}$ of the stainless steel powder and the calculation thereof are the same as that of the flaky stainless-steel pigment, and thereby, the description thereof will not be repeated.

In the transforming step mentioned above, in the case where a wet ball mill is used, it is preferable that each steel ball in the wet ball mill has a diameter of 4 mm or less. Accordingly, it is possible to grind efficiently the stainless steel powder to a size satisfying the abovementioned $D_{90}$ and $D_{50}$ and flatten efficiently the same to a desired size.

In the sieving step mentioned above, it is preferable to use a sieve which is made of stainless steel and has a diameter of 200 mm or more to 2000 mm or less, making it possible to reduce any wear or damage to the sieve while making the sieving efficient. In the case where the flaky stainless steel powder after the transforming step is a slurry, it is preferable to wash the slurry with a solvent such as mineral spirits and perform the sieving step thereafter. The sieve to be used has preferably an aperture size of 35 $\mu$m or less, and more preferably 25 $\mu$m or less. Accordingly, it is more reliable to produce the flaky stainless-steel pigment having $D_{90}$ of 23 $\mu$m or less and a passing rate of 99.9% or more by weight through a sieve having an aperture size of 38 $\mu$m.

According to the producing method as mentioned above, it is possible to produce the flaky stainless-steel pigment of the present invention. It should be noted that the producing method of the flaky stainless-steel pigment according to the present invention is not limited to the steps mentioned above, and may include the other steps.

<Resin Composition>

The present invention also relates to a resin composition formulated with the flaky stainless-steel pigment mentioned above. In addition to the flaky stainless-steel pigment, the resin composition may include a resin ingredient and a solvent. The resin composition of the present invention when formulated with the abovementioned flaky stainless-steel pigment can be used to form a coating film having a higher corrosion resistance than the conventional ones. Specifically, the resin composition can be used as a coating composition, an adhesive, a lining agent, plastics, FRP or the like.

The formulation amount of the flaky stainless-steel pigment in the resin composition of the present invention is preferably 5 parts or more to 120 parts or less by weight and more preferably 30 parts or more to 120 parts or less by weight relative to 100 parts by weight of the resin composition in terms of total solid content. In the case where the formulation amount of the flaky stainless-steel pigment is less than 5 parts by weight, the concealing property of the coating film formed from the resin composition is reduced, and in the case where the formulation amount is greater than 120 parts by weight, the adhesiveness of the resin composition decreases, and as a result, cracks are easy to occur on the coated film. In the present specification, the total solid content refers to the solid content remained after any fluid resin and any solvent are removed from the resin composition.

As the resin ingredient, any combination of two or more of epoxy resin, polyester resin, alkyd resin, acrylic resin, acryl silicone resin, vinyl resin, silicon resin (inorganic binder), polyamide resin, polyamide-imide resin, fluorine resin, synthetic resin emulsion, boiled oil, chlorinated rubber, natural resin, amino resin, phenol resin, polyisocyanate resin, and urea resin may be preferably used.

As the solvent, any alcohol-based, glycol-based, ketone-based, ester-based, ether-based or hydrocarbon-based organic solvent or water may be used, for example. In addition, when the resin composition is free of any solvent, it is generally called as a powder coating composition.

The resin composition of the present invention may contain a vehicle. As a preferable vehicle, epoxy resin (high in adhesiveness, hardness, corrosion resistance and wear resistance), polyester resin (high in corrosion resistance and hardness), acrylic resin (high in weather resistance and aesthetic effect), fluorine resin (high in corrosion resistance and weather resistance), polyamide-imide resin (high in hardness, heat resistance, flame resistance and wear resistance), and chlorinated rubber (high in weather resistance and workability) may be given as examples.

In addition, the resin composition of the present invention, if necessary, may be formulated with other additives or other pigments. As an example of other additives, a pigment dispersing agent, an anti-foaming agent, an anti-settling agents, a curing catalysts or a lubricating agent may be given. As an example of other pigments, an organic coloring pigment, an inorganic coloring pigment, an extender pigment, pearl mica , flaky aluminum, or placoid iron oxide may be given. Particularly, in the case where the resin composition is used as a solid lubricant coating composition for the purpose of providing lubrication for sliding, any lubricant, for example, any fluorocarbon resin such as polytetrafluoroethylene, ethylene-tetrafluoroethylene copolymer, polychlorotrifluoroethylene, polyvinyl fluoride, polyvinylidene fluoride, hexafluoropropylene-perfluoro (alkyl vinyl ether) copolymer and fluorinated ethylene-polypropylene copolymer, any fluorine-based monomer such as tetrafluoroethylene, any silicon-based oil, molybdenum disulfide, tungsten disulfide, boron nitride, or graphite may be formulated preferably. Note that due to the reasons mentioned above, it is preferable that the addition of an ultraviolet absorber or a light stabilizer should be avoided.

The formulation amount of the resin ingredient in the resin composition to be used as a coating composition is preferably 20 parts or more to 80 parts or less by weight relative to 100 parts by weight of the resin composition, and the formulation amount of the solvent is preferably 20 parts or more to 80 parts or less by weight relative to 100 parts by weight of the resin composition. In the case where the resin ingredient is less than 20 parts by weight, the adhesiveness of the resin composition decreases, and as a result, cracks are easy to occur on the coated film, and in the case where the resin ingredient is more than 80 parts by weight, the concealing property or the labyrinth effect decreases. In addition, in the case where the solvent is less than 20 parts by weight, it is not sufficient to disperse the flaky stainless-steel pigment in the resin composition, and in the case where the solvent is more than 80 parts by weight, the solvent evaporated in drying and curing the resin composition will pollute the environment disadvantageously. As mentioned in the above, when the resin composition is free of any solvent, it is generally called as a powder coating composition.

As described above in detail, it is possible to form a coating film having a high corrosion resistance from the resin composition of the present invention. It should be noted that in the present specification, the resin composition mentioned here includes not only the final kneaded product for coating applications but also any intermediate product to be formulated with a matrix resin such as a master batch containing the flaky stainless-steel pigment of the present invention or coloring pellets kneaded from the master batch and a coloring matrix resin.

<Coated Product>

The present invention also relates to a coated product provided with a coating film formed from the resin composition formulated with the flaky stainless-steel pigment. As mentioned above, since the resin composition can inherit the effects of the flaky stainless-steel pigment of the present invention, the coated product provided with a coating film formed from the resin composition on its base body can inherit the effects of the flaky stainless-steel pigment of the present invention as well. In other words, since the coated product of the present invention is provided with a coating film that exhibits a higher corrosion resistance on its surface, the base body of the coated product can be prevented from degrading even in harsh environments.

Preferred aspects of the coating film in the coated product of the present invention are listed below from (1) to (4):

(1) in any cross section of the coating film, the average inclination angle of the flaky stainless-steel pigment located closest to the surface of the coating film relative the surface of the base body is 5° or less, or preferably is 3° or less;

(2) in any region occupying 95% or more of any cross section of the coating film, an average number of two or more flaky stainless-steel pigments is present along the normal direction (the thickness direction) of the coating film;

(3) the film thickness of the coating film is 10 to 500 times of the average thickness t of the flaky stainless-steel pigment; and

(4) in any cross section of the coating film, the porosity is 5% or less.

Regarding the abovementioned aspect (1), in the case where the inclination angle is greater than 5°, the number of the flaky stainless-steel pigments protruding from the surface of the coating film increases, and cracks will occur around the projected portions, which thereby decreases the weather resistance of the coating film. Moreover, due to the protrusion of the flaky stainless-steel pigments from the surface of the coating film, the friction coefficient of the coating film increases, which thereby lowers the wear resistance and the tribological property. Thus, the application of the coating film to such a base body that will be used in a sliding part of a product will be limited.

Regarding the abovementioned aspect (2), in the case where the average number of the flaky stainless-steel pigments present in the normal direction is less than 2, a corrosive substance is likely to penetrate into the coating film, impairing the weather resistance and the adhesiveness of the coating film.

Regarding the abovementioned aspect (3), in the case where the film thickness of the coating film is less than 10 times of the average thickness t, the flaky stainless-steel pigment may not be suitably stacked in the thickness direction, which lowers the labyrinth effect of the coating film and thereby the corrosion resistance. On the other hand, in the case where the film thickness of the coating film is greater than 500 times of the average thickness t, the gap between the flaky stainless-steel pigments increases, which lowers the labyrinth effect and thereby the corrosion resistance. Further, as the coating film is being dried, it is liable that bubbles will occur in the coating film due to the volatilization of solvent, which may lowers the workability of coating operation. Furthermore, the solvent is apt to remain in the coating film, which may decrease the performance of the coating film.

Regarding the abovementioned aspect (4), in the case where the porosity is greater than 5%, the corrosive substance is likely to penetrate into the coating film, and consequently lowers the corrosion resistance, the wear resistance and the tribological property of the coating film.

Regarding the base body mentioned above, the material thereof is not particularly limited, and may be made of a metal product, plastic product, ceramic product, glass, wood, concrete, cloth, paper or the like. The structure of the substrate is not particularly limited, and any three-dimensional structure such as a strut, a bridge, a guardrail, a fastener (such as a bolt, a nut or a rivet), a sliding component (such as a seat belt component or a machining tool component), a supporter (for supporting a solar power panel, for example), a tank, a vehicle or an outdoor storage box (such as a cubicle), and any two-dimensional structure such as a pre-coated metal, a plate, a wall, a roof or a sheet may be used as the base body. The method of applying the resin composition of the present invention to a surface of the substrate is not particularly limited, any conventionally known coating method may be employed.

As long as the coated product of the present invention includes the coating film mentioned above, it may include other layers, and in particular it is preferable that a pretreated underlying layer is provided between the coating film and the base body. The provision of a pretreated underlying layer makes it possible to enhance the adhesiveness between the base body and the coating film, allowing the effects of the present invention to be exhibited more favorably.

As the pretreated underlying layer, a hot-dipped layer, a thermal spray plated layer, an electrolytic plating layer, an electroless plating layer, a vapor-deposited layer, a chemical conversion treated layer, an electro-deposition coated layer, an organic primer layer, or a zinc-rich primer layer may be given as an example, and in particular, a hot-dip galvanizing layer, an electro-galvanizing layer, a chemical conversion treated layer by an inorganic salt, or an organic primer layer is preferred. More preferably, the pretreated underlying layer is obtained through hot-dip galvanization, electro-galvanization, and chemical conversion treatment with an inorganic salt or an organic-based primer. In the case where any of various plating layers is selected as the pretreated underlying layer, it is desirable that such plating layer is used in combination with an organic primer layer.

As described above in detail, it is possible to form a coating film having a high corrosion resistance on the coated product of the present invention. Such coating film can prevent sufficiently the coated product from being degraded in harsh environments. In addition, since the coating film has a high wear resistance and a high tribological property, even when it is used in a substrate as a sliding part which is exposed to a highly corrosive environment, it can fully exhibit its effects.

EXAMPLES

Hereinafter, the present invention will be described in more detail according to the following examples, and it should be noted that the present invention is not limited to any of the examples.

<Example 1>

The flaky stainless-steel pigment was produced according to the following producing method.

Firstly, 1400g of spherical stainless steel powder having $D_{50}$ of 4 μm and $D_{90}$ of 8 μm was prepared (preparing step). The stainless steel powder was introduced into a ball mill which has an inner diameter of 500 mm and a length of 200 mm and contains 50 kg of steel balls each with a diameter of 2 mm, together with 2.7 L of mineral spirits and 140g of lauric acid which is used as a grinding aid. The mixture was milled and transformed for 2.5 hours at a rotational speed of 48 rpm (transforming step).

Then, the slurry inside the ball mill was washed out with mineral spirits and recovered. The recovered slurry was sieved by using a sieve having an aperture size as listed in Table 1 (sieving step). The inner diameter of the sieve used here was 495 mm, and the depth thereof was 50 mm. After the sieving step, the slurry passed through the sieve formed a cake, and the cake was kneaded in a kneading mixer to obtain a paste containing the flaky stainless-steel pigment (see Table 1).

Table 1

| | Stainless Steel Powder | | Grinding Ball Size (mm) | Processing Time (hr) | Aperture Size (μm) |
|---|---|---|---|---|---|
| | $D_{50}$ (μm) | $D_{90}$ (μm) | | | |
| Example 1 | 4 | 8 | 2 | 2.5 | 38 |
| Example 2 | 4 | 8 | 6.35 | 5.5 | 38 |
| Example 3 | 6 | 15 | 6.35 | 10 | 38 |
| Example 4 | 7 | 18 | 6.35 | 5.5 | 38 |
| Example 5 | 7 | 18 | 2 | 5.5 | 38 |
| Example 6 | 6 | 15 | 2 | 5.5 | 38 |
| Comparative Example 1 | 16 | 33 | 2 | 5 | 150 |

<Examples 2 to 6 and Comparative Example 1>

In Examples 2 to 6 and Comparative Example 1, except that the stainless steel powder, the steel balls, the processing time in the grinding and transforming treatment and the aperture size of the sieve were changed as shown in Table 1, each was performed in the same manner as in Example 1 to obtain a paste containing the flaky stainless-steel pigment.

<Characteristics of the Paste Containing the Flaky Stainless-steel Pigment>

For each paste obtained in Examples 1 to 5 and Comparative Example 1, the solid content (wt%) in the paste was determined. The solid content (wt%) is equal to the weight percentage of the flaky stainless-steel pigment relative to the paste. The $D_{50}$ and $D_{90}$, the average thickness, the aspect ratio and the passing rate through the sieve having an aperture size of 38 μm were determined as well for the flaky stainless-steel pigment in the paste.

1. Solid Content

The solid content (wt%) in each obtained paste was determined according to the following approach.

First, the obtained paste was transferred into a 100-ml beaker and dispersed by adding mineral spirits of about 5 ml. Then, it was kept still for 3 hours in a drying apparatus at 105°C±2°C for drying, and thereafter it was placed in a desiccator and cooled to room temperature. Then, the weight of the residue in the beaker was weighted, and the solid content (wt%) was calculated according to the following equation (1). The results are shown in Table 2.

$$\text{Solid content (wt\%)} = (W2/W1) \times 100 \qquad (1)$$

(In the equation (1), W1 represents the weight of the paste before drying, W2 represents the weight of the residue after being dried and cooled.)

2. $D_{50}$ and $D_{90}$

$D_{50}$ and $D_{90}$ of the flaky stainless-steel pigment contained in the obtained paste were determined according to the following approach.

First, 10 ml of toluene was added to 0.25 g of each paste obtained in Examples 1-6 and Comparative Example 1 to prepare a specimen. The particle size distribution in the specimen was determined by using a particle size distribution analyzer (Microtrac HRA 9320-X100 manufactured by Honeywell Co., Ltd.), and $D_{50}$ and $D_{90}$ were calculated on the basis of the determination result. The results are shown in Table 2.

3. Average Thickness

The average thickness of the flaky stainless-steel pigment contained in the paste obtained in Example 1 was determined according to the following procedures (i) to (vi). The results are shown in the column of "thickness" in Table 2.

(i) First, a standard sample (leafing aluminium paste, trade name: 0100M manufactured by Toyo Aluminium K.K.) was prepared. The water covering area ($cm^2$/g) of the standard sample was measured in advance according to the procedures of JIS K5906: 1998. The solid content in the standard was 65% by weight, and the water covering area $S_0$ was 25000 $cm^2$/g.

(ii) Next, 0.5 g of the abovementioned standard sample was weighed as the solid content, added to 49.5 g of acrylic clear lacquer (trade name: Auto Clear manufactured by Nippon Coating composition Co., Ltd.), and mixed through stirring for 3 minutes by using a mixer and deaerator system (trade name: MAZERUSTAR KK-400W manufactured by KURABO INDUSTRIES LTD.) to prepare a coating composition.

(iii) The prepared coating composition was pasted on a transparent PET film of 12 μm in thickness by using a doctor blade having a width of 1 mil (25 μm). The thickness of the coating film pasted on the PET film was 15 μm. Then, the transmittance of the coating film relative to light of 400 nm to 800 nm in wavelength was measured by using an ultraviolet-visible near-infrared spectrophotometer (trade name: V-570 manufactured by Nippon Spectroscopy Corporation) at transmittance-measuring mode.

(iv) Next, the paste obtained in Example 1 was used to prepare at least 5 coating compositions with different formulation amounts of solid contents according to the abovementioned procedure (ii). Specifically, "50-W" g of acrylic clear lacquer was added to "W" g of the solid content of the paste, and mixed through stirring for 3 minutes by using a mixer and deaerator system to prepare 50 g of a coating composition with different formulation amount of solid contents (i.e., paste formulation amount). Then, each paste was used to form a coating film, and the transmittance of each coating film was measured according to the procedure(iii) mentioned above.

(v) The weight of W (g) of the paste used to form the coating film, of which the measured transmittance has the same value as the transmittance of the standard sample, was substituted into the following equation (2) to calculate the water covering area S for the paste according to Example 1.

$$S = S_0 \times 0.5/W \qquad (2)$$

(vi) The water covering area S calculated according to the equation (2) was substituted into the following equation (3) to calculate the average thickness of the flaky stainless-steel pigment contained in the paste according to Example 1.

$$t = 10000/S \times \rho \qquad (3)$$

$\rho$ in the above equation (3) represents the density of the stainless steel and is equal to 7.8.

For each paste obtained in Examples 2 to 5 and Comparative Example 1, the average thickness t of the flaky stainless-steel pigment was determined according to the procedures (i) to (vi) mentioned above.

4. Aspect Ratio

For each paste obtained in Examples 1 to 6 and Comparative Example 1, the aspect ratio ($D_{50}$/t) was calculated by dividing $D_{50}$ ($\mu$m) of the flaky stainless-steel pigment by the thickness t ($\mu$m) thereof. The calculated results are shown in Table 2.

5. Passing Rate Through Sieve Having Mesh Size of 38 $\mu$m

The passing rate (wt%) of the obtained paste through a sieve having an aperture size of 38 $\mu$m was determined by wet sieving. Specifically, first, 30 g of each paste obtained in Examples 1 to 6 and Comparative Example 1 was transferred into a 100-ml beaker, and 100 ml of mineral spirits was slowly added to disperse the paste so as to prepare a sample. Then, a sieve (inner diameter: 200 mm, depth: 50 mm) having an aperture size of 38 $\mu$m sieve was fixed above a recovery container (container 1), and the prepared sample was poured into the sieve. A small amount of mineral spirits was used to wash the remaining sample out of the beaker, and the washing solution was also poured into the sieve.

Then, mineral spirits were filled into another recovery container (container 2) capable of housing therein the sieve to approximately half of the depth of the container. Thereafter, the sieve was placed into the container 2 until the net of the sieve was immersed under the liquid surface of the mineral spirits. Thus, the sample remained on the net was immersed in the mineral spirits in the container 2. In this state, the sieve was moved diagonally, vertically or laterally relative to the liquid surface to perform the sieving operation. Then, the mineral spirits in the container 2 were removed, and new mineral spirits were added into the container 2 to repeat the sieving operation.

The above sieving operation was repeated until no sample is dropped from the sieve into the mineral spirits, i.e., the sieving operation was finished until no flaky stainless-steel pigment can pass through the meshes of the sieve. Whether there is or no flaky stainless-steel pigment passing through the meshes of the sieve was confirmed via visual observation.

Then, the sample remained on the net of the sieve was placed together with the sieve in a drying apparatus kept at 105°C$\pm$2°C for drying, and thereafter held still to cool down. Finally, the flaky stainless-steel pigment remained on the net of the sieve was collected, and the passing rate (wt%) of the flaky stainless-steel pigment in the paste passing through the sieve having an aperture size of 38 $\mu$m was calculated according to the following equation (4). The weight of the flaky stainless-steel pigment before sieving was obtained in such a manner that 10g of the paste was placed in a drying apparatus kept at 105°C$\pm$2°C for drying, and thereafter held still to cool down, and the weight of the cooled flaky stainless-steel pigment was weighted as the weight of the flaky stainless-steel pigment before sieving. The results are shown in Table 2.

$$\text{Passing rate (wt\%)} = \{(S1-S2)/S1\} \times 100 \qquad (4)$$

(In the equation (4), S1 denotes the weight of the flaky stainless-steel pigment before being sieved by using a sieve according to wet sieving, and S2 denotes the weight of the flaky stainless-steel pigment remained on the sieve after being sieved.)

Table 2

| | | Flaky Stainless-steel Pigment | | | | Solid Content (wt%) | Sieve Passing Rate (wt%) |
|---|---|---|---|---|---|---|---|
| | | $D_{50}$ ($\mu$m) | $D_{90}$ ($\mu$m) | Thickness ($\mu$m) | Aspect Ratio | | |
| | Example 1 | 6.9 | 13.4 | 0.24 | 29 | 97.6 | 99.9 |
| | Example 2 | 13.6 | 26.3 | 0.13 | 105 | 90.4 | 99.8 |
| | Example 3 | 16.7 | 32.5 | 0.09 | 186 | 89.8 | 99.5 |
| | Example 4 | 18.7 | 34.6 | 0.14 | 134 | 90.2 | 99.5 |
| | Example 5 | 11.4 | 20.2 | 0.17 | 67 | 90.2 | 99.9 |
| | Example 6 | 19.0 | 36.0 | 0.33 | 58 | 92 | 99.9 |
| | Comparative Example 1 | 57.8 | 118 | 0.38 | 152 | 90 | 31.2 |

As obviously seen from Table 2, in Examples 1 to 5, the flaky stainless-steel pigment was obtained to have $D_{90}$ of 55 $\mu$m or less and a passing rate of 99% or more by weight through a sieve having an aperture size of 38 $\mu$m. In particular, by performing the sieving operation using a sieve having an aperture size of 38 $\mu$m, the prepared flaky stainless-steel pigment can have $D_{90}$ of 35 $\mu$m or less and a passing rate of 99% or more by weight through a sieve having an aperture size of 38 $\mu$m.

<Corrosion Resistance 1>

Each paste of Example 5 and Comparative Example 1 was used to form a coating film according to the following approach so as to confirm the corrosion resistance thereof.

First, a coating composition was prepared as the resin composition by mixing an epoxy resin and the paste in such a manner that the content of the paste is 80 parts by weight relative to 100 parts by weight of the solid content (including a curing agent) of the resin. Then, the coating composition was diluted by using a solvent until the viscosity of the coating composition is optimal for spraying. In addition, the solvent used is a ketone-based solvent, and the added amount of the solvent was about 20 to 50 parts by weight relative to 100 parts by weight of the coating composition. Subsequently, the prepared coating composition was sprayed onto a zinc phosphate-treated steel plate (bonderizing treatment #144) and baking dried for 20 minutes at 200 °C to form a coating film having a thickness of $15\pm5$ $\mu$m on the steel plate. Thereafter, an X-shape crack was created on the coating film by scratching a central portion of the coating film using a cutter. Then, a salt spray test (based on JIS Z 2371: 2000) was performed on the coating film for 250 hours, and the changes thereof were observed.

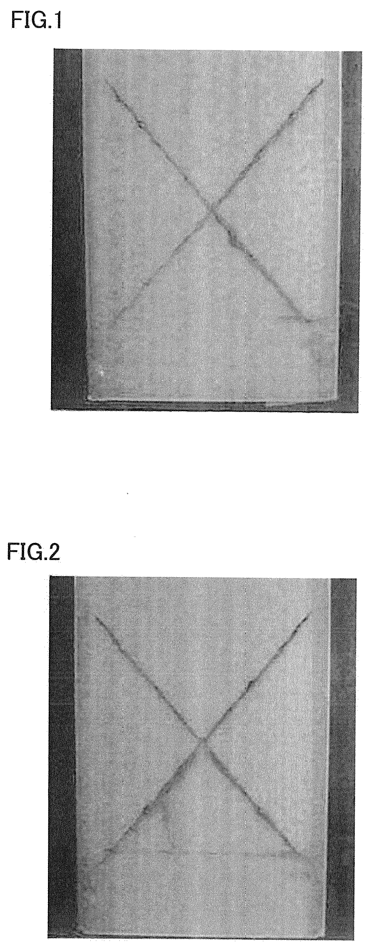

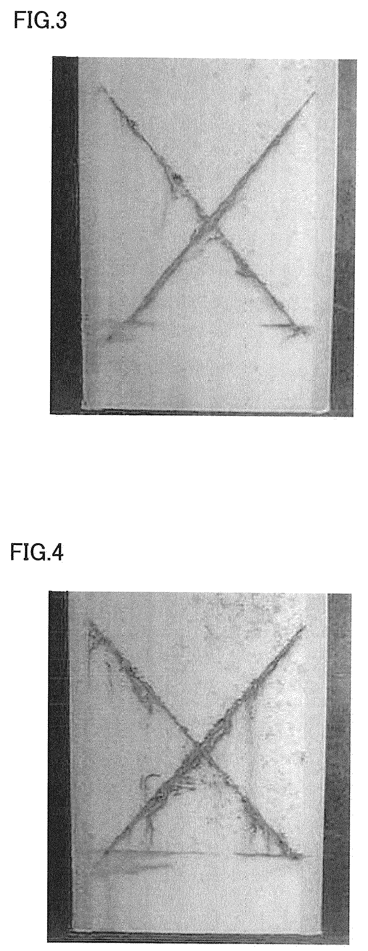

The results are shown in Figs. 1 to 4. Figs. 1 and 2 are diagrams illustrating the state of the crack on the coating film formed from the coating composition formulated with a paste of Example 5 after 250 hours. Figs. 3 and 4 are diagrams illustrating the state of the crack on the coating film formed from the coating composition formulated with a paste of Comparative Example 1 after 250 hours.

As obviously seen from Figs. 1 to 4, less corrosion was observed on the plate where a coating film was formed from the coating composition formulated with the paste of Example 5 than on the plate where a coating film was formed from the coating composition formulated with the paste of Comparative Example 1. In Figs. 1 to 4, the black shadows present on and around the X-shape crack correspond to the corrosion points. Thus, it was confirmed that the coating film formed from the coating composition formulated with the paste of Example 5 has a high corrosion resistance.

<Corrosion Resistance 2>

In the same manner as in <corrosion resistance 1>, each paste of Examples 1-6 and Comparative Example 1 was used to prepare a coating film, and an X-shape crack was created on the coating film. Then, a salt spray test (based on JIS Z 2371: 2000) was performed on the coating film for 3000 hours, and the changes thereof were observed. The results are shown in Table 3.

Table 3

|  | Appearance |
| --- | --- |
| Example 1 | no corrosion |
| Example 2 | slightly spotted corrosion |
| Example 3 | spotted corrosion |
| Example 4 | spotted corrosion |
| Example 5 | no corrosion |
| Example 6 | no corrosion |
| Comparative Example 1 | universal corrosion |

In Table 3, "no corrosion" means that no corrosion was visually observed. "Slightly spotted corrosion" means that the corrosion was visually observed as slight spots present on and around the X-shape crack. "Spotted corrosion" means that the corrosion was visually observed as spots present on and around the X-shape crack. "Universal corrosion" means that the corrosion was visually observed as continuously present on and around the entire X-shape crack.

As obviously seen from Table 3, regarding the coating film formed from the coating composition formulated with the paste of Examples 1 to 6, no corrosion or only spotted corrosion was observed even under the salt spray test for 3000 hours. Particularly, regarding the coating composition formulated with the paste of each of Examples 1, 5 and 6 where the average aspect ratio of the flaky stainless-steel pigment is in the range of 10 to 100, no corrosion was observed. On the other hand, regarding the coating composition formulated with the paste of Comparative Example 1, universal corrosion was observed. Thus, it was confirmed that the coating film formed from coating formulated with the paste containing the flaky stainless-steel pigment of the present invention has a high corrosion resistance.

<Surface Roughness>

Each paste of Examples 1 to 6 and Comparative Example 1 was used to prepare a coating film according to the following approach so as to confirm the surface roughness thereof.

First, a paste and a resin solution (trade name: Nippe Acrylic Auto Clear Super manufactured by Nippon Paint Co., Ltd.) were kneaded to prepare a coating composition of 30g in which the solid content is 6 parts by weight. The solid content corresponds to the amount of the flaky stainless-steel pigment contained in the paste. Then, the coating composition was applied on a glass plate using a doctor blade applicator of 9 mils in width, and naturally dried to form a coating film on a glass plate. The thickness of the formed coating film was 25 $\mu$m.

A confocal laser scanning microscope (trade name: OLS1200 manufactured by Olympus Co., Ltd.) was used to measure the surface of the coating film, and the surface roughness was analyzed by using an application software to calculate the arithmetic mean surface roughness (Ra). The results are shown in Table 4.

Table 4

|  | Surface Roughness ($\mu$m) |
| --- | --- |
| Example 1 | 3.9 |
| Example 2 | 2.9 |
| Example 3 | 2.7 |
| Example 4 | 3.0 |
| Example 5 | 2.9 |
| Example 6 | 3.1 |
| Comparative Example 1 | 7.4 |

As apparently seen from Table 4, in comparison to the fact that the surface roughness (Ra) of the coating film (Ra) was not greater than 4 in Examples 1 to 6, the surface (Ra) roughness of the coating film in Comparative Example 1 was as great as 7.4. Thus, it was confirmed that in Examples 1 to 6, the flaky stainless-steel pigment projected from the surface of the coating film is less than that in Comparative Example 1, and thereby it was understood that the coating film in Examples 1 to 6 has a higher wear resistance and a higher tribological property.

Heretofore, the embodiments and examples of the present invention have been illustrated, but it has been initially expected to appropriately combine features of the embodiments and examples.

It should be understood that the embodiments and the examples disclosed herein have been presented for the purpose of illustration and description but not limited in all aspects. It is intended that the scope of the present invention is not limited to the description above but defined by the scope of the claims and encompasses all modifications equivalent in meaning and scope to the claims.

**Claims**

1. A flaky stainless-steel pigment consisting:

   particles having a $D_{90}$ of 55 $\mu$m or less in the volume cumulative particle size distribution and a passing rate of 99% or more by weight through a sieve having an aperture size of 38 $\mu$m.

2. The flaky stainless-steel pigment according to claim 1, wherein
   the average thickness t is 0.03 $\mu$m or more to 0.5 $\mu$m or less, and
   the average particle size $D_{50}$ is 3 $\mu$m or more to 30 $\mu$m or less.

3. The flaky stainless-steel pigment according to claim 1 or 2, wherein
   the average aspect ratio ($D_{50}$/t), which is a ratio of the mean particle size $D_{50}$ relative to the average thickness t, is 5 or more to 100 or less.

4. The flaky stainless-steel pigment according to claim 1 or 2, wherein
the average aspect ratio ($D_{50}$/t), which is a ratio of the mean particle size $D_{50}$ relative to the average thickness t, is 10 or more to 100 or less.

5. The flaky stainless-steel pigment according to any one of claims 1 to 4, wherein $D_{90}$ is 40 $\mu$m or less.

6. A resin composition formulated with the flaky stainless-steel pigment according to any one of claims 1 to 5.

7. A coated product provided with a coating film formed from the resin composition according to claim 6.

FIG.1

FIG.2

FIG.3

FIG.4

**INTERNATIONAL SEARCH REPORT**

| International application No. |
| --- |
| PCT/JP2014/058237 |

A.  CLASSIFICATION OF SUBJECT MATTER
*B22F1/00*(2006.01)i, *C09C1/62*(2006.01)i, *C09D7/12*(2006.01)i, *C09D201/00*
(2006.01)i

According to International Patent Classification (IPC) or to both national classification and IPC

B.  FIELDS SEARCHED

Minimum documentation searched (classification system followed by classification symbols)
B22F1/00, C09C1/62, C09D7/12, C09D201/00

Documentation searched other than minimum documentation to the extent that such documents are included in the fields searched

| | | | |
| --- | --- | --- | --- |
| Jitsuyo Shinan Koho | 1922–1996 | Jitsuyo Shinan Toroku Koho | 1996–2014 |
| Kokai Jitsuyo Shinan Koho | 1971–2014 | Toroku Jitsuyo Shinan Koho | 1994–2014 |

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
| --- | --- | --- |
| Y | JP 60-252668 A  (Hitachi Metals, Ltd.), 13 December 1985 (13.12.1985), page 1, lower right column, lines 1 to 20 (Family: none) | 1-7 |
| Y | Takeshi SAKURAI, Katsumi TANAKA, "Stainless Steel Flake Paint PHOENIX", Kawasaki Steel Giho, 1987, vol.19, no.2, pages 142 to 144 | 1-7 |
| Y | JP 2009-504909 A  (Dunwilco (1198) Ltd.), 05 February 2009 (05.02.2009), paragraphs [0002] to [0011] & US 2010/0167079 A1    & EP 1912755 A & WO 2007/020364 A1 | 1-7 |

☒  Further documents are listed in the continuation of Box C.     ☐  See patent family annex.

| | | |
| --- | --- | --- |
| * | Special categories of cited documents: | "T" later document published after the international filing date or priority date and not in conflict with the application but cited to understand the principle or theory underlying the invention |
| "A" | document defining the general state of the art which is not considered    to be of particular relevance | |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
| --- | --- |
| 20 May, 2014 (20.05.14) | 27 May, 2014 (27.05.14) |

| Name and mailing address of the ISA/ | Authorized officer |
| --- | --- |
| Japanese Patent Office | |
| Facsimile No. | Telephone No. |

Form PCT/ISA/210 (second sheet) (July 2009)

**INTERNATIONAL SEARCH REPORT**

International application No.

PCT/JP2014/058237

C (Continuation). DOCUMENTS CONSIDERED TO BE RELEVANT

| Category* | Citation of document, with indication, where appropriate, of the relevant passages | Relevant to claim No. |
|---|---|---|
| A | WO 2010/095485 A1 (Toyo Aluminium Kabushiki Kaisha), 26 August 2010 (26.08.2010), paragraphs [0024] to [0026] & US 2012/0016078 A1 & EP 2399967 A1 | 1-7 |
| A | JP 2011-020021 A (Kansai Paint Co., Ltd.), 03 February 2011 (03.02.2011), paragraphs [0024], [0025] (Family: none) | 1-7 |

Form PCT/ISA/210 (continuation of second sheet) (July 2009)

## REFERENCES CITED IN THE DESCRIPTION

**Patent documents cited in the description**

- JP 2006152299 A
- JP 2000154338 A
- JP 2002273339 A
- JP 2004269647 A
- JP 2007244992 A